# EUROPEAN PATENT APPLICATION

(11) **EP 3 273 097 A1**
(43) Date of publication of application: **24.01.2018**
(21) Application number: 16768250.9
(22) Date of filing: 19.02.2016
(51) Int. Cl.: F16H 55/36

(54) **POWER TRANSMISSION DEVICE**

(30) Priority: 20.03.2015 JP 2015057253
(71) Applicant: Ogura Clutch Co., Ltd., Kiryu-shi, Gunma 376-0011 (JP)
(72) Inventor: HARA,Yukihiro, Kiryu-shi Gunma 376-0011 (JP); KANZAWA,Takahiro, Kiryu-shi Gunma 376-0011 (JP)
(74) Representative: Zenz Patentanwälte Partnerschaft mbB
(86) International application number: PCT/JP2016/054825
(87) International publication number: WO 2016/152347

(57) **Abstract**

A power transmission device includes a pulley (6) serving as a rotation member, an elastic member serving as a power transmission member, a fixing screw extending through these, and a nut that sandwiches the pulley (6) and the elastic member in cooperation with the fixing screw. The power transmission device includes a nut holder (25) attached to the pulley (6) via a hooking structure. The hooking structure includes a through hole (14) of the pulley (6), a hook (13) of the nut holder (25), which can be inserted into the through hole (14), and an elastic piece (33) located near the hook (13). When the nut holder (25) is rotated in one of rotation directions with respect to the pulley (6) in a state in which the hook (13) is inserted into the through hole (14), a hooking piece (36) of the hook (13) comes into contact with the pulley (6), and a pawl portion (43) of the elastic piece (33) engages with the opening edge of the through hole (14). It is possible to provide a power transmission device that employs a structure capable of easily attaching the nut holder and prevents the nut holder from being disengaged by a pressing force that presses the fixing screw against a nut.

## Description

### Technical Field

The present invention relates to a power transmission device including a nut holder configured to hold a nut at an attachment portion between a rotation member and a power transmission member.

### Background Art

Conventionally, a power transmission device used in a compressor for a car air conditioner includes a pulley to which the power of an engine is transmitted, a hub connected to the rotating shaft of the compressor, and a power transmission mechanism that connects the pulley and the hub. The power transmission mechanism is assembled to the hub and thus formed as one assembly. After the pulley is fixed to the housing of the compressor or the like, the power transmission mechanism is fastened to the pulley by fixing screws and nuts.

This fastening operation is often done in a place different from the place for the power transmission mechanism assembling operation. For this reason, to easily perform the fastening operation, the nuts are assembled and held in the pulley in advance. An operation of assembling the nuts to the pulley is also preferably as easy as possible to improve the productivity and reduce the manufacturing cost.

To easily assemble the nuts to the pulley, for example, a locking pawl type nut holder as described in patent literature 1 is probably usable.

The locking pawl type nut holder disclosed in patent literature 1 includes an annular nut holder main body including a plurality of concave portions in which the nuts are fitted, and a plurality of locking pieces extending from the nut holder main body to the pulley side in the axial direction. The plurality of concave portions open to the pulley side.

Each locking piece is formed to be elastically deformable in a direction to bend with respect to the axial direction. The locking piece is provided with a locking pawl at the distal end. The locking pawl elastically deforms the locking piece when it is inserted into a through hole of the pulley. In a state in which the locking pawl projects outward from the through hole, the locking pawl is hooked (set in a locked state) at the opening edge of the through hole by the elastic restoring force of the locking piece.

The conventional nut holder with the nuts fitted in the concave portions is overlaid on the pulley and fixed to the pulley together with the nuts when the locking pieces are forced into the through holes of the pulley, and the locking pawls are set in the locked state.

### Related Art Literature

### Patent Literature

Patent Literature 1: Japanese Patent Laid-Open No. 2011-247406

### Disclosure of Invention

### Problem to be Solved by the Invention

According to the locking pawl type nut holder disclosed in patent literature 1, the nut holder may be disengaged from the pulley when fixing screws are screwed into the nuts. This is because the operation of screwing a fixing screw into a nut is performed while pressing the fixing screw against the nut.

A pressing force formed from a pressing load acts as a force that presses the locking pawl of the nut holder in the axial direction (the direction in which the nut holder is separated from the pulley). If such a pressing force is applied, the locking pawl is deformed and unlocked from the opening edge of the through hole. If the locking pawl is unlocked from the opening edge, the locked state is canceled, and the nut holder is disengaged from the pulley, as described above.

The present invention has been made to solve the problem and has as its object to provide a power transmission device that employs a structure capable of easily attaching a nut holder and prevents the nut holder from being disengaged by a pressing force that presses a fixing screw against a nut.

### Means of Solution to the Problem

In order to achieve the above object, according to the present invention, there is provided a power transmission device comprising a rotation member, a power transmission member overlaid on the rotation member from one end side in an axial direction, a fixing screw extending through the rotation member and the power transmission member in the axial direction, a nut configured to sandwich the rotation member and the power transmission member in cooperation with the fixing screw, and an annular nut holder attached to, of the rotation member and the power transmission member, a member on a nut side close to the nut via a hooking structure at each of a plurality of portions of the rotation member in a rotation direction and configured to hold the nut, wherein the hooking structure comprises a through hole formed in the member on the nut side and extending through the member on the nut side in the axial direction, a hook formed into a shape that can be inserted into the through hole, projecting toward the member on the nut side at a position of the nut holder corresponding to the through hole, and including, at a distal end, a hooking piece projecting in one of the rotation directions, an elastic piece provided at a position of the nut holder apart from the hook in the other of the rotation directions to be swingable in the axial direction by elastic deformation, and a pawl portion provided at a distal end of the elastic piece and projecting from an end surface of the nut holder in contact with the member on the nut side toward the member on the nut side, and when the nut holder is rotated in one of the rotation directions with respect to the member on the nut side in a state in which the hook is inserted into the through hole, the hooking piece comes into contact with the member on the nut side from an opposite side of the nut holder, and the pawl portion engages with an opening edge of the through hole on a side of the other of the rotation directions.

### Effect of the Invention

According to the present invention, when the hooking piece of the hook comes into contact with the member on the nut side, the hook is hooked on the member on the nut side. In addition, the pawl portion of the elastic piece engages with the through hole, and in this state, regulates the rotation of the nut holder with respect to the member on the nut side in the direction (in the other of the rotation directions) to cancel the hooked state of the hooking piece.

When the hook is thus set in the hooked state, and the pawl portion engages with the through hole, the nut holder is fixed to the member on the nut side together with the nuts. That is, the nut holder can easily be fixed to the member on the nut side without using any tool.

When the fixing screw is screwed into the nut of the nut holder to connect the rotation member and the power transmission member, a pressing force formed from a pressing load is applied to the nut. The pressing force acts on the hook as a force that presses the hook in the axial direction. Unlike the locking piece disclosed in patent literature 1, the hook need not be greatly elastically deformed and can be made with high rigidity.

For this reason, according to the present invention, since the hook can be prevented from being deformed by the above-described pressing force, it is possible to firmly fix the nut holder to the member on the nut side.

Hence, according to the present invention, it is possible to provide a power transmission device that employs a structure capable of easily attaching the nut holder and prevents the nut holder from being disengaged by the pressing force that presses the fixing screw against the nut.

### Brief Description of Drawings

Fig. 1 is a sectional view of a power transmission device according to the present invention;
Fig. 2 is a front view of a pulley to which a nut holder is attached, in which the cut portion of Fig. 1 is indicated by a line I - I in Fig. 2;
Fig. 3 is a perspective view of the pulley and the nut holder;
Fig. 4 is a front view of the pulley;
Fig. 5 is a front view of the nut holder;
Fig. 6A is a sectional view for explaining an operation of attaching the nut holder, which shows a state in which a hook is located at a position corresponding to a through hole;
Fig. 6B is a sectional view for explaining an operation of attaching the nut holder, which shows a state in which the hook is inserted into the through hole, and an elastic piece is elastically deformed; and
Fig. 6C is a sectional view for explaining an operation of attaching the nut holder, which shows a state in which a hooking piece is set in a hooked state, and a pawl portion engages with the through hole.

### Best Mode for Carrying Out the Invention

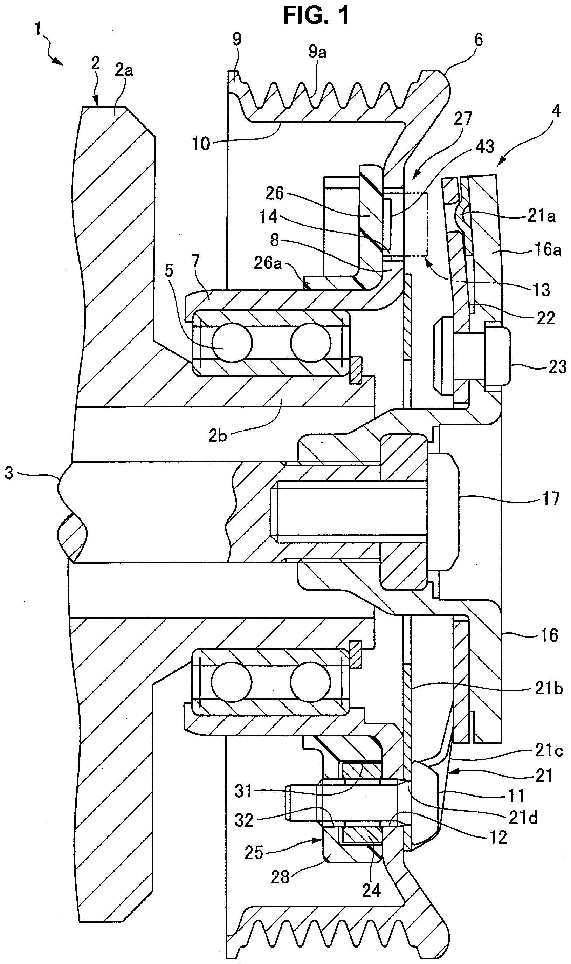

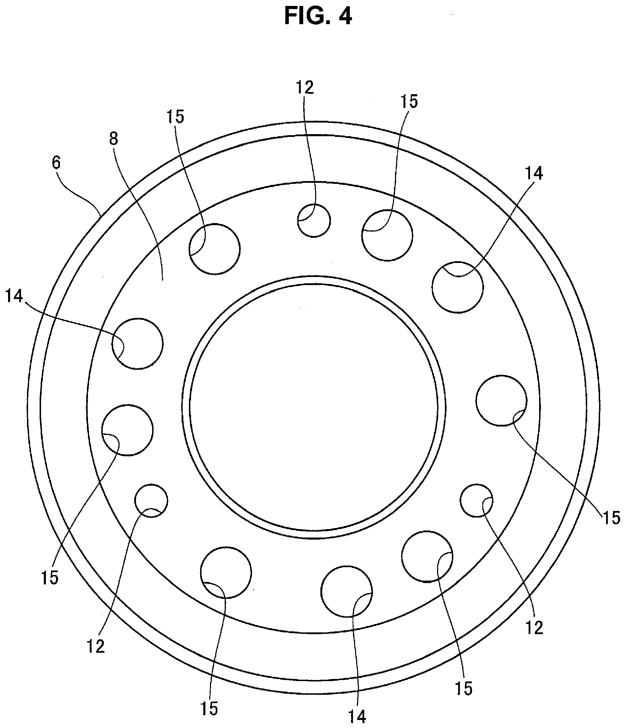

A power transmission device according to an embodiment of the present invention will now be described in detail with reference to Figs. 1 to 6C.

A power transmission device 1 shown in Fig. 1 is configured to transmit the power of a car engine (not shown) to a rotating shaft 3 of a compressor 2 for a car air conditioner. The power transmission device 1 also includes a torque limiter mechanism 4 configured to cut off the power transmission when an overload is generated on the rotating shaft 3. In this embodiment, the distal end side (the right side in Fig. 1) of the rotating shaft 3 will be referred to as the front side of the compressor 2, and the opposite side as the rear side.

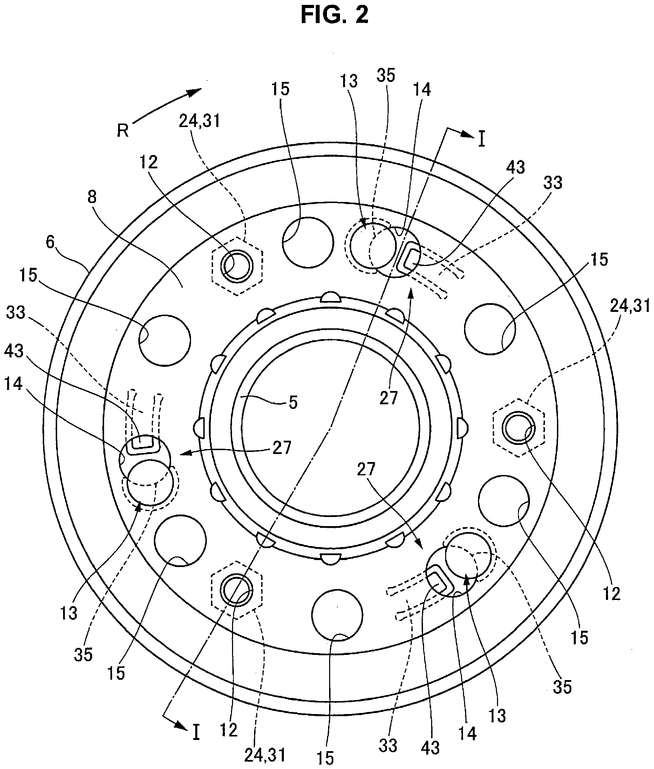

The compressor 2 includes a housing 2a that rotatably supports the rotating shaft 3. A tubular portion 2b located on the same axis as the rotating shaft 3 is formed at the front end of the housing 2a. On the tubular portion 2b, a pulley 6 is rotatably supported by a bearing 5. The pulley 6 is made of a so-called sheet metal formed into a predetermined shape by plastic working of a steel plate. In this embodiment, the pulley 6 forms "a rotation member" in the present invention. The pulley 6 according to this embodiment rotates clockwise in Fig. 2. In Fig. 2, the rotation direction of the pulley 6 is indicated by an arrow R.

The pulley 6 is formed by a boss portion 7 fitted on the bearing 5, a disc portion 8 extending from the front end of the boss portion 7 outward in the radial direction, and a rim portion 9 extending from the outer periphery of the disc portion 8 to the rear side of the compressor 2. For this reason, an annular groove 10 opening to the rear side of the compressor 2 is formed in the pulley 6 according to this embodiment. The housing 2a of the compressor 2 is formed into a shape that covers the opening portion of the annular groove 10 from the rear side.

As shown in Figs. 2 to 4, three different kinds of through holes are formed in the disc portion 8 of the pulley 6. A first through hole is a screw through hole 12 configured to pass a fixing screw 11 to be described later. A second through hole is a hook through hole 14 configured to pass a hook 13 (see Fig. 2) to be described later. The screw through holes 12 and the hook through holes 14 are provided at positions to equally divide the pulley 6 into three parts in the circumferential direction. A third through hole is a noise reduction through hole 15 configured to reduce wind noise generated when the pulley 6 rotates. The disc portion 8 according to this embodiment includes the noise reduction through holes 15 between the screw through holes 12 and the hook through holes 14.

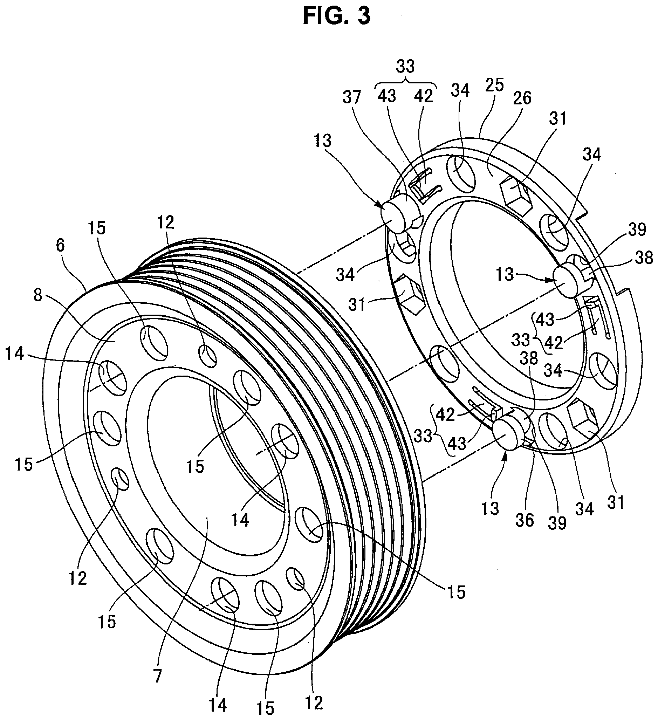

As shown in Figs. 1 and 3, a so-called poly-V groove 9a that a transmission belt (not shown) is looped over is formed in the rim portion 9 of the pulley 6.

A hub 16 is attached to the front end of the rotating shaft 3 by spline fitting. The hub 16 is fixed to the rotating shaft 3 by a fixing bolt 17 and connected to the pulley 6 via the torque limiter mechanism 4.

As shown in Fig. 1, the torque limiter mechanism 4 includes two members, that is, an elastic member 21 fixed to the disc portion 8 of the pulley 6 by the fixing screws 11 and a holding plate 22 located near a flange portion 16a of the hub 16 extending in the radial direction. The elastic member 21 is formed into a ring-shaped plate, as will be described later in detail, and is connected while being fastened to the disc portion 8 of the pulley 6 by the fixing screws 11. In addition, clamped portions 21a are provided on the outer peripheral side of the elastic member 21. The holding plate 22 clamps and holds the clamped portions 21a in cooperation with the hub 16.

The elastic member 21 forms "a power transmission member" in the present invention. The elastic member 21 according to this embodiment includes a base portion 21b formed into an annular shape to surround the rotating shaft when viewed from the axial direction of the rotating shaft. Three connecting pieces 21c are provided on the outer peripheral portion of the base portion 21b so as to project. The clamped portion 21a is formed at the distal end of each connecting piece 21c. The elastic member 21 is formed by the base portion 21b, the three connecting pieces 21c, and the clamped portions 21a provided in correspondence with the connecting pieces 21c.

The connecting pieces 21c extend from the annular base portion 21b outward in the radial direction and also extend in the circumferential direction. The connecting pieces 21c are provided on the outer peripheral portion of the base portion 21b so as to be arranged at equal intervals in the circumferential direction. The connection portions between the connecting pieces 21c and the annular base portion 21b are fastened to the disc portion 8 by a fastening structure including the fixing screws 11. Through holes 21d configured to pass the fixing screws 11 are formed in the above-described connection portions of the elastic member 21.

The clamped portions 21a are sandwiched and held between the flange portion 16a of the hub 16 and the outer peripheral portion of the holding plate 22. The holding plate 22 is fixed to the hub 16 by rivets 23 in a state in which the holding plate 22 sandwiches and holds the clamped portions 21a in cooperation with the flange portion 16a.

A fastening portion that fastens and connects the elastic member 21 to the disc portion 8 of the pulley 6 is formed by the fixing screws 11, nuts 24 provided in correspondence with the fixing screws 11, and a nut holder 25 that holds the nuts 24.

The fixing screws 11 extend through the disc portion 8 and the elastic member 21 in the axial direction from the front side of the compressor 2 (the right side in Fig. 1). The fixing screws 11 are provided in correspondence with the three connecting pieces 21c of the elastic member 21. That is, the elastic member 21 is fixed to the disc portion 8 by the three fixing screws 11.

In this embodiment, general hexagon nuts are used as the nuts 24 and sandwich the disc portion 8 and the elastic member 21 in cooperation with the fixing screws 11.

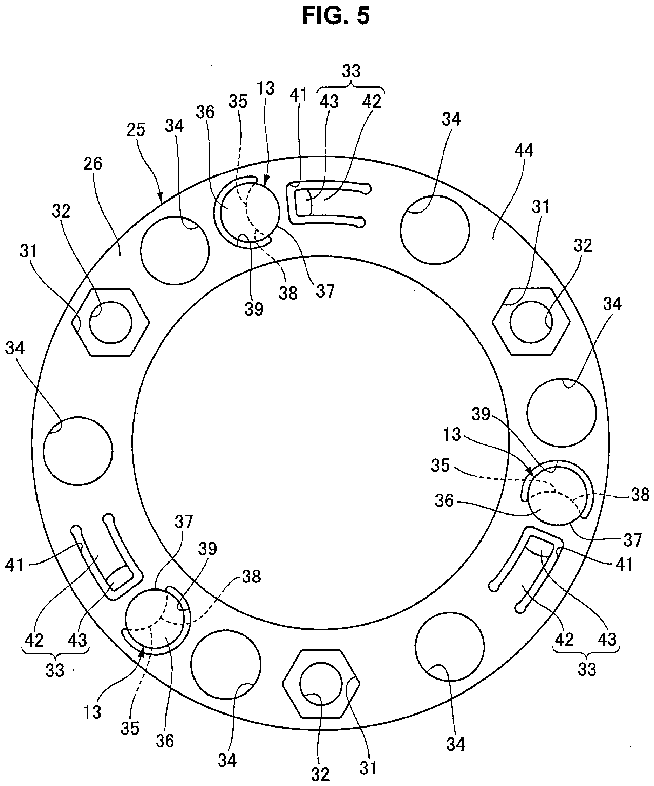

As shown in Figs. 3 and 5, the nut holder 25 that holds the nuts 24 includes a ring-shaped nut holder main body 26 and is attached to the disc portion 8 of the pulley 6 via a hooking structure 27 (to be described later). The hooking structure 27 is provided at each of a plurality of portions in the rotation direction of the pulley 6, as will be described later in detail. In this embodiment, the pulley 6 corresponds to "a member on a nut side close to a nut" in the present invention. The nut holder 25 according to this embodiment is formed into a predetermined shape using a synthetic resin as a material.

The nut holder main body 26 is formed into a plate shape parallel to the disc portion 8 of the pulley 6, and is overlaid on the rear-side end surface of the disc portion 8, as shown in Fig. 1. The nut holder main body 26 according to this embodiment includes, on its inner surface, a cylindrical rib 26a (see Fig. 1) projecting backward. The rib 26a is fitted on the boss portion 7 of the pulley 6.

As shown in Fig. 1, columnar portions 28 are formed at portions of the nut holder main body 26 facing the screw through holes 12 of the disc portion 8. Each columnar portion 28 is formed into a shape that extends from the nut holder main body 26 to the opposite side of the disc portion 8 (the rear side of the compressor 2) and projects. The columnar portions 28 are formed integrally with the nut holder main body 26 by molding. The height (the thickness in the axial direction of the nut holder 25) of the columnar portions 28 is formed to be larger than the length of the nuts 24 in the axial direction.

The columnar portions 28 are configured to hold the nuts 24. Each columnar portion 28 includes a concave portion 31 formed into such a shape that is fitted on the nut 24, and a screw insertion through hole 32 extending through the bottom of the concave portion 31.

The concave portion 31 opens to the end surface of the nut holder main body 26 facing the disc portion 8.

As shown in Fig. 3, the opening of the concave portion 31 has a hexagonal shape in which the six corner portions of the nut 24 are fitted. The concave portion 31 is formed into a depth capable of storing the nut 24, as shown in Fig. 1. Between the concave portions 31 at three points on the nut holder main body 26, the above-described hooks 13 and elastic pieces 33 to be described later are provided, and through holes 34 for noise reduction are formed. The noise is wind noise generated when the nut holder 25 rotates together with the pulley 6.

The hook 13 and the elastic piece 33 form a part of the hooking structure 27. The hooks 13 and the elastic pieces 33 are formed at positions to equally divide the nut holder 25 into three parts in the circumferential direction.

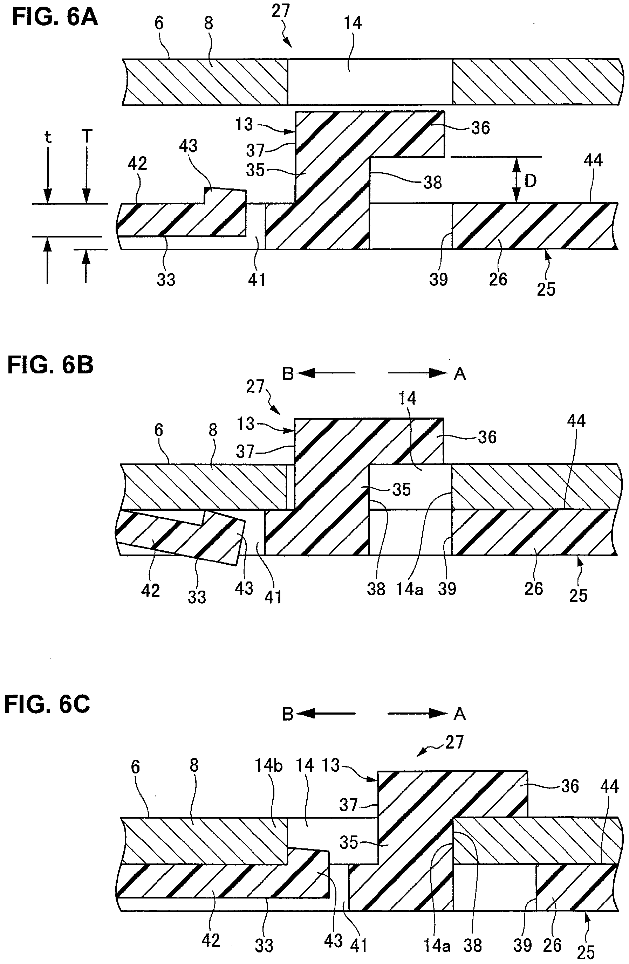

As shown in Figs. 2 and 6C, the hooking structure 27 according to this embodiment is formed by the hook through hole 14 formed in the disc portion 8 of the pulley 6, the hook 13 inserted into the hook through hole 14, and the elastic piece 33 located near the hook 13.

The hook through hole 14 is formed into a shape extending through the disc portion 8 in the axial direction of the rotating shaft 3. The opening of the hook through hole 14 has a circular shape. According to this embodiment, the hook through hole 14 corresponds to "a through hole" in the present invention.

As shown in Fig. 1, the hook 13 is provided at a portion of the nut holder main body 26 facing the hook through hole 14 of the disc portion 8. The hook 13 is formed into a shape insertable into the hook through hole 14. The hooks 13 and the hook through holes 14 are disposed at a plurality of portions spaced part at an interval in the rotation direction of the pulley 6. In this embodiment, the hooks 13 and the hook through holes 14 are disposed at positions to equally divide the pulley 6 into three parts in the circumferential direction.

The hooks 13 project from the nut holder 25 in a direction pointing to the disc portion 8 in the axial direction of the pulley 6.

As shown in Fig. 6C, the hook 13 according to this embodiment is formed into an inverted L-shaped section in Fig. 6C by a column 35 projecting from the nut holder main body 26 in the axial direction (the vertical direction in Fig. 6C) of the pulley 6, and a hooking piece 36 extending from the distal end of the column 35 in one of the rotation directions of the pulley 6. The one of the rotation directions here is the direction indicated by an arrow A in Fig. 6C. Note that the other of the rotation directions is indicated by an arrow B in Fig. 6C.

As shown in Fig. 7, the column 35 is formed into a columnar shape having two curved surfaces. The two curved surfaces include a first convex surface 37 that forms a part of the column, and a second convex surface 38 that connects the two ends of the first convex surface 37 in the circumferential direction. Each of the first convex surface 37 and the second convex surface 38 is formed into an arc section. In addition, each of the first convex surface 37 and the second convex surface 38 is formed into a shape capable of being fitted on a hole wall surface 14a (see Fig. 6C) of the hook through hole 14.

The hooking piece 36 is formed into a shape that can be inserted into the hook through hole 14, and as shown in Fig. 5, projects from the column 35 in one of the rotation directions of the pulley 6 when viewed from the axial direction of the pulley 6. The hooking piece 36 according to this embodiment is formed into a disc shape capable of being fitted in the hook through hole 14. The outer surface of the hooking piece 36 is connected to the first convex surface 37 of the column 35 without forming a step.

That is, the hooking piece 36 according to this embodiment is formed into a shape obtained by partially removing a part of a virtual column that can be fitted in the hook through hole 14. A hole 39 (see Fig. 3) is formed at a portion of the nut holder main body 26 facing the hooking piece 36. The hole 39 is formed into a shape extending through the nut holder main body 26.

A gap D (see Fig. 6A) between the hooking piece 36 and the nut holder main body 26 is smaller than the thickness of the disc portion 8 of the pulley 6, and is formed into a size that allows the disc portion 8 of the pulley 6 to be press-fitted between the hooking piece 36 and the nut holder main body 26, as shown in Fig. 6C.

As shown in Fig. 5, a slit 41 having a U shape is formed near the hook 13 of the nut holder main body 26 at a position apart from the hook 13 in the other of the rotation directions of the pulley 6. A part of the nut holder main body 26 surrounded by the slit 41 forms the elastic piece 33 having a so-called cantilever structure. The elastic piece 33 is formed by an elastic deformation potion 42 extending toward the hook 13, and a pawl portion 43 provided at the distal end of the elastic deformation potion 42. A thickness t of the elastic deformation potion 42 is smaller than a thickness T of the nut holder main body 26, as shown in Fig. 6A. That is, the elastic piece 33 is formed to be swingable in the axial direction (the vertical direction in Fig. 6C) of the nut holder main body 26 by elastic deformation.

As shown in Fig. 6A, the pawl portion 43 projects from an end surface 44 of the nut holder main body 26 toward the disc portion 8 of the pulley 6 in a state in which the elastic deformation potion 42 is not bent. The end surface 44 is the end surface of the nut holder main body 26, which comes into contact with the disc portion 8 of the pulley 6. As shown in Fig. 6C, the position of the pawl portion 43 in the circumferential direction of the nut holder main body 26 is a position to engage with an opening edge 14b of the hook through hole 14 in a state in which the second convex surface 38 of the hook 13 is in contact with the hole wall surface 14a of the hook through hole 14. The opening edge 14b is the opening edge of the hook through hole 14 on the side of the above-described other of the rotation directions.

A procedure of assembling the nuts 24 to the pulley 6 using the nut holder 25 having the above structure will be described next. The nut holder 25 with the nuts 24 stored in the concave portions 31 is inserted into the annular groove 10 of the pulley 6. At this time, each hook 13 is located at a position matching the hook through hole 14 of the pulley 6 in the circumferential direction of the nut holder 25, as shown in Fig. 6A. Then, as shown in Fig. 6B, the hook 13 is inserted into the hook through hole 14, and the nut holder main body 26 is abutted against the disc portion 8 of the pulley 6 against the spring force of the elastic piece 33. At this time, the elastic piece 33 is bent as the pawl portion 43 is pressed by the disc portion 8.

Next, in this state, the nut holder 25 is rotated in the above-described one of the rotation directions with respect to the pulley 6. The rotation direction at this time is the direction in which the hooking piece 36 projects from the column 35, which is indicated by the arrow A in Fig. 6B. This rotation is done against the frictional resistance between the hooking piece 36 and the disc portion 8. Then, the column 35 of the hook 13 is abutted against the hole wall surface 14a of the hook through hole 14, as shown in Fig. 6C. At this time, the second convex surface 38 of the column 35 is fitted on the hole wall surface 14a of the hook through hole 14. When the column 35 abuts against the hole wall surface 14a in this way, the hooking piece 36 comes into contact from the opposite side of the nut holder main body 26, and the hook 13 is hooked on the pulley 6 (disc portion 8).

Additionally, at this time, the pawl portion 43 of the elastic piece 33 enters the hook through hole 14 and engages with the opening edge 14b of the hook through hole 14. The opening edge 14b is the opening edge on the side of the other of the rotation directions. The pawl portion 43 engages with the hook through hole 14, and in this state, regulates the rotation of the nut holder 25 with respect to the pulley 6 in the direction (in the other of the rotation directions) to cancel the hooked state of the hooking piece 36.

When the hook 13 is thus set in the hooked state, and the pawl portion 43 engages with the hook through hole 14, the nut holder 25 is fixed to the pulley 6 together with the nuts 24. That is, the nut holder 25 can easily be fixed to the pulley 6 without using any tool.

When connecting the elastic member 21 to the pulley 6, the fixing screw 11 is screwed into the nut 24 of the nut holder 25. At this time, a pressing force formed from a pressing load is applied to the nut 24. The pressing force acts on the hook 13 as a force that presses the hook 13 in the axial direction. Unlike the locking piece disclosed in patent literature 1, the hook 13 need not be greatly elastically deformed and can be made with high rigidity.

For this reason, according to the present invention, since the hook 13 can be prevented from being deformed by the above-described pressing force, it is possible to firmly fix the nut holder 25 to the pulley 6. In addition, since the elastic piece 33 regulates the rotation of the nut holder 25 with respect to the pulley 6 in the direction to cancel the hooked state of the hook 13, the nut holder 25 never disengages from the pulley 6.

Hence, according to this embodiment, it is possible to provide a power transmission device that employs a structure capable of easily attaching the nut holder 25 and prevents the nut holder 25 from being disengaged by the pressing force that presses the fixing screw 11 against the nut 24.

The through hole with which the pawl portion 43 according to this embodiment engages is the hook through hole 14 in which the hook 13 is inserted. Hence, since one hook through hole 14 is shared by the hook 13 and the elastic piece 33, the hooking structure 27 can be formed compact. Note that the power transmission device according to the present invention is not limited to this, and a through hole with which only the pawl portion 43 engages may be provided in the disc portion 8 of the pulley 6.

The nut holder 25 according to this embodiment includes the plate-shaped nut holder main body 26 to be overlaid on the disc portion 8 of the pulley 6. The hook 13 and the elastic piece 33 are provided on the nut holder main body 26. The thickness t of a portion (elastic deformation potion 42) of the elastic piece 33 except the pawl portion 43 is smaller than the thickness T of the nut holder main body 26.

For this reason, according to this embodiment, since the elastic piece 33 that can be easily elastically deformed can be obtained, the operation of assembling the nut holder 25 to the pulley 6 can be performed more easily.

The hook 13 according to this embodiment is formed by the column 35 extending in the axial direction and the hooking piece 36 provided at the distal end of the column 35. The portion (second convex surface 38) of the column 35 facing the hole wall surface 14a of the hook through hole 14 is formed into a shape capable of being fitted on the hole wall surface 14a.

According to this embodiment, since the column 35 can be brought into tight contact with the hole wall surface 14a when setting the hook 13 in the hooked state, the angle to rotate the nut holder main body 26 with respect to the disc portion 8 of the pulley 6 can be made as large as possible.

For this reason, the area of the portion where the hooking piece 36 and the disc portion 8 of the pulley 6 overlap in the axial direction in the hooked state can be made as large as possible. The portion where the hooking piece 36 and the disc portion 8 of the pulley 6 overlap in the axial direction corresponds to a pressure receiving portion that receives the pressing force when the fixing screw 11 is screwed into the nut 24. Hence, by employing this embodiment, it is possible to provide a power transmission device capable of more firmly fixing the nut holder 25.

The hook through hole 14 according to this embodiment has a circular opening shape. The column 35 of the hook 13 is formed into a columnar shape having the first convex surface 37 that forms a part of the column, and the second convex surface 38 that connects the two ends of the first convex surface 37 in the circumferential direction. Each of the first convex surface 37 and the second convex surface 38 is formed into an arc section capable of being fitted on the hole wall surface 14a of the hook through hole 14.

When the fixing screw 11 is screwed into the nut 24, a rotating force is applied to the nut holder 25 in the direction in which it rotates about the fixing screw 11. According to this embodiment, even if the rotating force is transmitted from the second convex surface 38 of the column 35 to the hole wall surface 14a of the hook through hole 14, the rotating force is widely dispersed from almost the whole region of the second convex surface 38 to the hole wall surface 14a. It is therefore possible to prevent the rotating force from concentrating to break the hook 13.

The pulley 6 according to this embodiment includes the cylindrical boss portion 7 in the axis. Additionally, the inner surface of the nut holder 25 is fitted on the boss portion 7 of the pulley 6. For this reason, the outer surface of the boss portion 7 serves as a guide (guide surface) when rotating the nut holder 25 relative to the pulley 6. Hence, the operation of assembling the nut holder 25 to the pulley 6 is easy, although the hooking structures 27 each including the hook 13 and the elastic piece 33 are provided at a plurality of portions of the pulley 6 in the rotation direction.

The elastic piece 33 according to this embodiment is surrounded by the U-shaped slit 41 and formed into a cantilever shape. The elastic piece 33 can be formed using a mold that can be separated in the axial direction of the nut holder 25. For this reason, the elastic piece 33 can be molded using the same mold as that for the remaining parts of the nut holder 25. Explanation of the Reference Numerals and Signs

1...power transmission device, 6...pulley (rotation member), 8...disc portion, 11...fixing screw, 13...hook, 14...hook through hole, 14a...hole wall surface, 21...elastic member (power transmission member), 24...nut, 25...nut holder, 26...nut holder main body, 27...hooking structure, 33...elastic piece, 35...column, 36...hooking piece, 38...second convex surface, 43...pawl portion

## Claims

1. A power transmission device comprising:
a rotation member;
a power transmission member overlaid on the rotation member from one end side in an axial direction;
a fixing screw extending through the rotation member and the power transmission member in the axial direction;
a nut configured to sandwich the rotation member and the power transmission member in cooperation with the fixing screw; and
an annular nut holder attached to, of the rotation member and the power transmission member, a member on a nut side close to the nut via a hooking structure at each of a plurality of portions of the rotation member in a rotation direction and configured to hold the nut,
wherein the hooking structure comprises:
a through hole formed in the member on the nut side and extending through the member on the nut side in the axial direction;
a hook formed into a shape that can be inserted into the through hole, projecting toward the member on the nut side at a position of the nut holder corresponding to the through hole, and including, at a distal end, a hooking piece projecting in one of the rotation directions;
an elastic piece provided at a position of the nut holder apart from the hook in the other of the rotation directions to be swingable in the axial direction by elastic deformation; and
a pawl portion provided at a distal end of the elastic piece and projecting from an end surface of the nut holder in contact with the member on the nut side toward the member on the nut side, and
when the nut holder is rotated in one of the rotation directions with respect to the member on the nut side in a state in which the hook is inserted into the through hole, the hooking piece comes into contact with the member on the nut side from an opposite side of the nut holder, and the pawl portion engages with an opening edge of the through hole on a side of the other of the rotation directions.

2. The power transmission device according to claim 1, wherein the through hole with which the pawl portion engages is the through hole in which the hook is inserted.

3. The power transmission device according to claim 1 or 2, wherein the nut holder comprises a plate-shaped nut holder main body to be overlaid on the member on the nut side,
the hook and the elastic piece are provided on the nut holder main body, and
a thickness of a portion of the elastic piece except the pawl portion is smaller than a thickness of the nut holder main body.

4. The power transmission device according to any one of claims 1 to 3, wherein the hook is formed by a column extending in the axial direction and the hooking piece provided at a distal end of the column, and
a portion of the column facing a hole wall surface of the through hole is formed into a shape capable of being fitted on the hole wall surface.

5. The power transmission device according to claim 4, wherein the through hole has a circular opening shape,
the column is formed into a columnar shape having a first convex surface that forms a part of the column, and a second convex surface that connects two ends of the first convex surface in a circumferential direction, and
each of the first convex surface and the second convex surface is formed into an arc section capable of being fitted on the hole wall surface of the through hole.

6. The power transmission device according to any one of claims 1 to 5, wherein the member on the nut side includes a cylindrical boss portion in an axis, and
an inner surface of the nut holder is fitted on the boss portion.

7. The power transmission device according to any one of claims 1 to 6, wherein the elastic piece is surrounded by a U-shaped slit and formed into a cantilever shape.
